# EUROPEAN PATENT APPLICATION

(11) **EP 2 152 014 A1**
(43) Date of publication of application: **10.02.2010**
(21) Application number: 08104983.5
(22) Date of filing: 07.08.2008
(51) Int. Cl.: H04Q 1/02

(54) **Network element, holding element, profile rail and set**

(71) Applicant: Nokia Siemens Networks Oy, 02610 Espoo (FI)
(72) Inventor: Deng, Hong Wei, Beijing (CN); Huang, Zi Liang, Beijing (CN); Zhu, Yong, Beijing (CN)
(74) Representative: Bruglachner, Thomas E.

(57) **Abstract**

Described is a network element (10) comprising a mechanical frame (12). The frame (12) comprises at least one rail (96). The rail (96) comprises at least one first groove (106). The network element (10) also comprises at least one holding element (100) which is arranged in the first groove (106) and which is fastened to the first groove (106) by a fastening element (102). Furthermore, the network element (10) comprises at least one electrical or electronic device (52) which is fastened to the holding element (100), for example by the fastening element (102a) or by a second fastening element (103).

## Description

The present invention generally relates to a network element, a holding element, a profile rail and a set of a holding element and a profile rail. The network element may be a telecommunication network element, a router or a switch.

Known network elements comprise a mechanical frame which comprises a plurality of rails, for instance made of steel. Steel is very rigid, therefore it is no problem to fasten several electrical and electronic devices on the frame. However, steel has a grater specific weight than other metals and in general metals are getting more expensive.

Network elements of telecommunication networks or of data packet transmission networks have often to fulfill very special demands, for instance:
- with regard to fire resistance, and or
- earthquake resistance.

Other requirements for network elements result from standards or de facto standards, for instance from:
- Advanced Telecommunications Computing Architecture (ATCA) of the PCI (Peripheral Component Interconnect) Industrial Computer Manufacturer Group (PICMG), and/or
- Network Equipment-Building System (NEBS) of Regional Bell Operating Companies (RBOC).

Therefore, there is a need in the art to provide a network element, a holding element, a profile rail and a set thereof that may be manufactured in a costly and mechanically reliable manner.

This need is accomplished by the subject matter of the independent claims. The sub claims refer to specific embodiments of the present invention.

There may be a network element, comprising:
- a mechanical frame, the frame comprising at least one rail, the rail comprising at least one groove,
- at least one holding element which is arranged in the first groove and which is fastened to the first groove by a fastening element,
- at least one electrical or electronic device which is fastened to the holding element, for instance by the (first) fastening element or by a second fastening element.

This means that the electronic device is not fastened directly to the frame. Instead of a direct connection the holding element is used. The holding element is interposed between the frame and the electronic and electrical device to have a degree of freedom for selecting the material of the frame independent of the kind of the fastening element. The device may be fastened to the holding element directly by the fastening element or indirectly by using a second fastening element.

The first groove may extend in a longitudinal direction of the rail, for instance along a straight line. Furthermore, the groove may comprise a cross section in a plane which is orthogonal to the longitudinal direction. At this cross-section the groove may widen with increased distance from a part of an opening of the groove. This part of the groove is also arranged in the plane of the cross-section. The groove may for instance widen in a step like manner. This means that the groove may have some kind of undercut. In other words, the rail may embrace the holding element in a C-profile manner.

The cross-section of the rail may have a rectangular or a square like shape or contour. Other shapes are possible as well.

The rail may contain aluminum or may consist of aluminum . This means that the rail may be made of aluminum or an aluminum alloy. For instance, there may be at least 90 atom percent or 99 atom percent aluminum. Aluminum is lighter than other materials, for instance than steel. However, aluminum leads to problems regarding the fastening of devices, for instance regarding connections using screws. Especially for network elements there are very high demands with regard to functional security. This means that a network element has to fulfill a series of test conditions, for instance conditions that simulate earthquakes or that simulate fire. It is therefore an advantage if the electronic devices are not fastened directly to an aluminum frame. Instead of direct fastening, the holding element between the frame and the device is used. The aluminum rail may be formed by rod extrusions or by other kinds of extrusion. Alternatively, other materials than aluminum may be used, for instance other metals.

The holding element may contain iron or may consist of at least 90 atom percent iron. For instance, the holding element may be made of steel, especially of carbon steel or stainless steel. Iron, especially steel, is a more rigid material compared to aluminum or other materials. Therefore iron or steel is appropriate for the fastening of electrical devices, for instance by screws or by pins that are press-fitted into holes. A holding element that is made of iron or steel fulfills the high demands for network element, especially with regard to earthquakes and with regard to fire. Alternatively, the holding element may be made of other materials, especially of other metals.

The holding element may comprise at least one threaded bore. The fastening element may comprise a threaded shaft which is screwed into the threaded bore. A screw connection is a mechanically stable connection that is also detachable. The fastening element may comprise a threaded shaft. The shaft may comprise a hole that has a cross-section which differs from a circle. There may be for instance a hexagonal cross-section for a hex key or a hex wrench. Alternatively, there may be a slit or several slits for another screw drive type.

The holding element may comprise at least two threaded bores, at least one bore containing a threaded shaft. If there are two bores, it is possible to adjust the holding element with regard to the frame during a first assembling step and after this step to fasten an electrical device on the holding element during a second assembling step.

The fastening element may be pressed against a base surface or bottom surface of the first groove. This means that the fastening element is pushed against the rail at its free end. The holding element itself may be pressed against an opening of the groove by the fastening element. This pressure leads to a static friction force that holds the holding element in the groove. There is an unexpected effect that this kind of fastening fulfills the test conditions specified for network elements, for instance in standard ETSI (European Telecommunications Standards Institute), EN (European Norm) 300 019-2-4, "Environmental condition and environmental tests for telecommunication equipment". By using this kind of fastening, it is possible to fulfill manufacturing tolerances that are smaller than 0.5 mm (Millimeter) or even smaller than 0.35 mm for the placement of the electrical or electronic devices. The tolerances may be greater than 0.001 mm. These tolerances can especially be reached if there is a separate adjustment step before the fastening step of the electronic devices.

Alternatively, the fastening element may pull the holding element against an opening of the groove. Again the holding element is pressed against an opening of the groove and held by static friction force. The advantages that were mentioned above are also valid for this kind of fastening.

The holding element may comprise a main body which is shaped like a bar, i.e. the cross section is essentially rectangular or square like. A bar with such a shape is easy to manufacture, for instance from a solid profile of steel with an appropriate shape. The cross section may be modified by additional grooves, shoulders and/or by protrusions that are created when grooves or shoulders are formed in the bar. This is explained in more detail below.

The holding element may comprise:
- a first side directed to an opening of the first groove,
- a second side directed to the bottom of the first groove,
- a third side directed to a first side wall of the groove, and
- a fourth side directed to a second side wall of the groove. The second side may be opposite, i.e. back to back, to the first side. Correspondingly, the third side may be opposite to the fourth side.

The first side may comprise a first planar surface. Likewise the second side may comprise a second planar surface, the third side may comprise a third planar surface and the fourth side may comprise a fourth planar surface. The first surface may be arranged in parallel to the second surface. Likewise, the third surface may be arranged in parallel to the fourth surface. The third surface may be arranged orthogonally to the first surface. This means that the bar has the shape of a parallelepiped.

A second groove of the network element - that is a first groove of the holding element - may be arranged at the second side of the holding element. In this case the second surface may form the bottom of the second groove. The side walls of the second groove may be on fins that extend in the longitudinal direction of the rail. The fins allow easier assembling of the holding element into the groove. The second groove allows the manufacturing of a holding element with less material and therefore with less weight.

A first shoulder may extend along a first side of the first surface, and a second shoulder may extend along a second side of the first surface. The second side may be opposite to the first side. Furthermore, the first shoulder and the second shoulder may adjoin the first surface. The first shoulder and the second shoulder may fit into the opening of the first groove. The first shoulder may also be adjacent or may be in touch with the third surface. The second shoulder may also be adjacent to the first surface. This means that no further shoulder or groove is between the first surface and the third surface or between the first surface and the fourth surface of the connection bar.

The first shoulder may comprise a planar first shoulder surface and a planar second shoulder surface. The second shoulder surface may be arranged orthogonally to the first shoulder surface. The first shoulder surface may additionally be arranged in parallel to the first surface. The second shoulder surface may be preferably arranged in parallel to the third surface. Such a holding element is easy to manufacture and allows an easy centering of the holding element within the opening of the first groove.

The network element may comprise telecommunication equipment, a router or a switch. A special kind of telecommunication equipment is for instance circuit switch equipment or xDSL equipment (x Digital Subscriber Line). The router may perform forwarding of data packets according to a protocol that is used in a higher protocol layer, for instance the internet protocol (IP). The switch may perform switching of data packets at a lower level, for instance using MAC (Medium Access Control). With this kind of network elements, there is an unexpected effect that the usage of the holding element fulfills the high demands regarding earthquake tests and fire tests.

The invention also relates to a holding element that comprises some or all of the features mentioned above. Furthermore, the invention refers to a profile rail that includes some or all of the features of the profile rail mentioned above. Further, the invention relates to a set of a holding element and a profile rail. The holding element fits to the profile rail, especially within a tolerance that is lower than 0.5 mm.

The foregoing has outlined rather broadly the features and technical advantages of embodiments of the present invention in order that the detailed description of the invention that follows may be better understood. Additional features and advantages of the embodiments of the invention will be described hereinafter. It should be appreciated by those skilled in the art that the conception and the specific embodiments disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

For a more complete understanding of the present invention and the advantages thereof, reference is now made to the following description taken in conjunction with the accompanying drawings, in which:
- Figure 1: illustrates a perspective view of a telecommunica- tion cabinet,
- Figure 2: illustrates a detailed view of a connection frame of the cabinet,
- Figure 3: illustrates a detailed view of a connection bar,
- Figure 4: illustrates a cross-section of the connection bar shown in Figure 3,
- Figure 5: illustrates a perspective view of the connection bar, and
- Figure 6: illustrates a cross-section of a second embodi- ment.

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention. Moreover, the same reference signs refer to the same technical features if not stated otherwise. As far as "may" is used in this application it means the possibility of doing so as well as the actual technical implementation.

The present invention will be described with respect to preferred embodiments in a specific context namely a telecommunication cabinet. The invention may also be applied, however, to other technical devices including a frame.

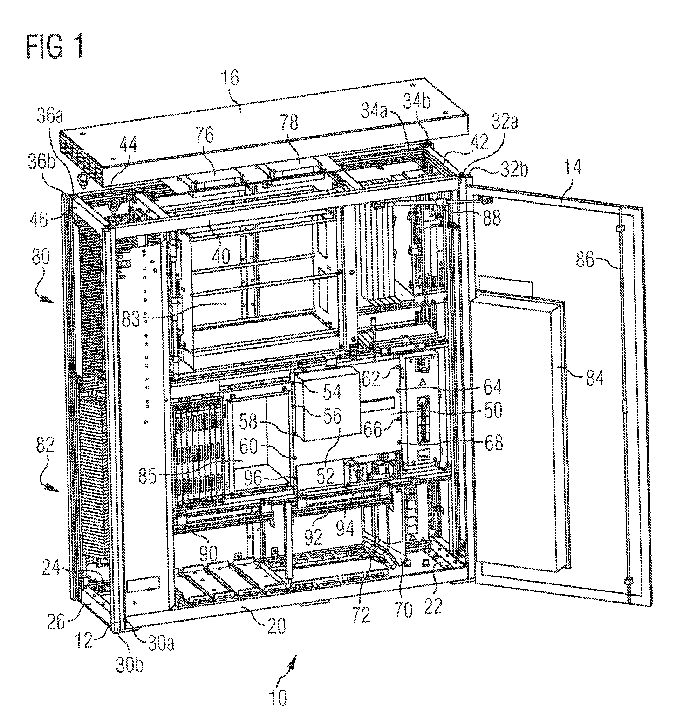

Figure 1 illustrates a perspective view of a telecommunication cabinet 10. The cabinet 10 includes a frame 12, two doors (only right hand side door 14 is shown), a top cover 16 and covers for side walls and for the back wall (although not shown).

The frame 12 comprises :
- a front bottom rail 20,
- a right bottom rail 22,
- a back bottom rail 24,
- a left bottom rail 26,
- left front rails 30a, 30b,
- right front rails 32a, 32b,
- right back rails 34a, 34b,
- left back rails 36a, 36b,
- front top rail 40,
- right top rail 42,
- back top rail 44, and
- left top rail 46.

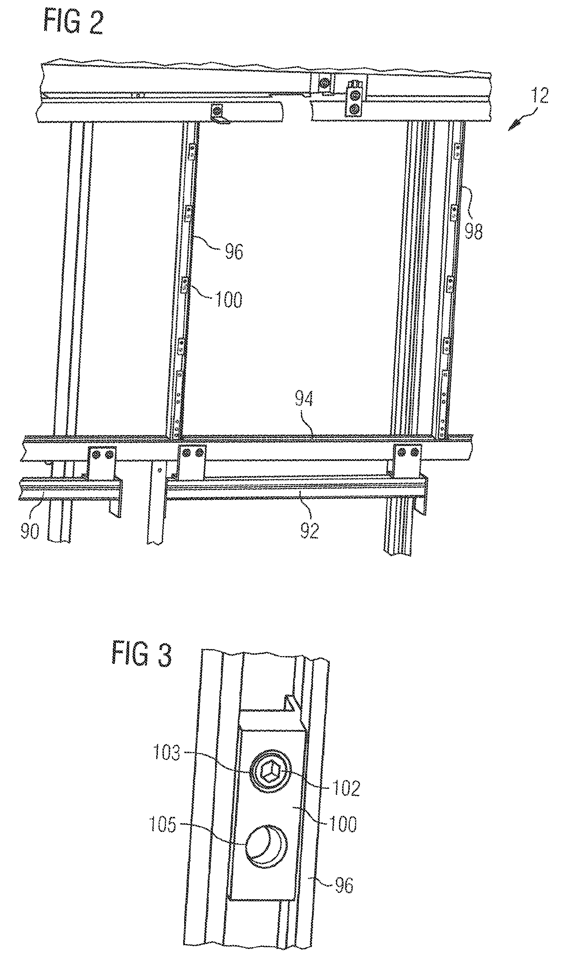

This means that the frame 12 has the shape of a parallelepiped. The cabinet 10 includes for instance a support plate 50 for an electronic device, for instance, for a rectifier. The support plate 50 is fastened to the frame 12 by screws 54 to 68. This fastening will be described in more detail below with reference to Figures 2 to 6.

Figure 1 also shows air ventilation channels 70, 72 in the lower part of cabinet 10. Electrical fans 76, 78 may be arranged in the upper part of the cabinet 10. An air flow may be directed through slots in the front door 14 and through a channel 84 which contains a filter element to the fans 76, 78. Other arrangements of the air inlets and the air outlets are also possible, for instance in side walls of cabinet 10.

Other electronic devices 82 may be arranged in slots 80 that are situated on the left side of the cabinet 10. Digital logic units (DLU) 83 may be also inserted in cabinet 10. These DLU's are connected or may be connected to subscriber lines that lead to DSL (Digital Subscriber Line) subscribers which use for instance ADSL (Asymmetrical Digital Subscriber Line) or other kinds of xDSL. Therefore, a unit 83 is also named as an electronic splitter.

Other telecommunication equipment 85 may be arranged left from plate 50, for instance DSLAM's (DSL Access Multiplexer). HiX 5630 or HiX 5635 DSLAM's manufactured by Nokia Siemens Networks may be used, for instance.

Figure 1 also shows a locking mechanism 86 for locking door 14. Furthermore a telescope arm 88 is shown which is connected to frame 12 and to door 14.

Figure 1 also shows mounting rails 90, 92 that are arranged above compartments for batteries. Both mounting rails 90, 92 are fastened on a horizontal rail 94 by means of holding elements that are identical to the holding elements which are explained in more detail below. Furthermore there are other electronic devices that are fastened to frame 12 in the same manner.

Vertical rails 96 and 98 are arranged at the left side and at the right side of the support plate 50. Vertical rails 96, 98 are also shown in Figure 2.

Figure 2 shows a detailed view of frame 12 of cabinet 10. Support plate 50 is omitted in Figure 2. Vertical rail 96 supports four connection bars. One of these connection bars is referenced by reference sign 100.

As shown in Figure 3, connection bar 100 is fastened to vertical rail 96 by a screw 102. Connection bar 100 comprises two threaded holes 103 and 105. Screw 102 is arranged in threaded hole 103 that is located above threaded hole 105. However in other embodiments threaded hole 105 is located above threaded hole 103.

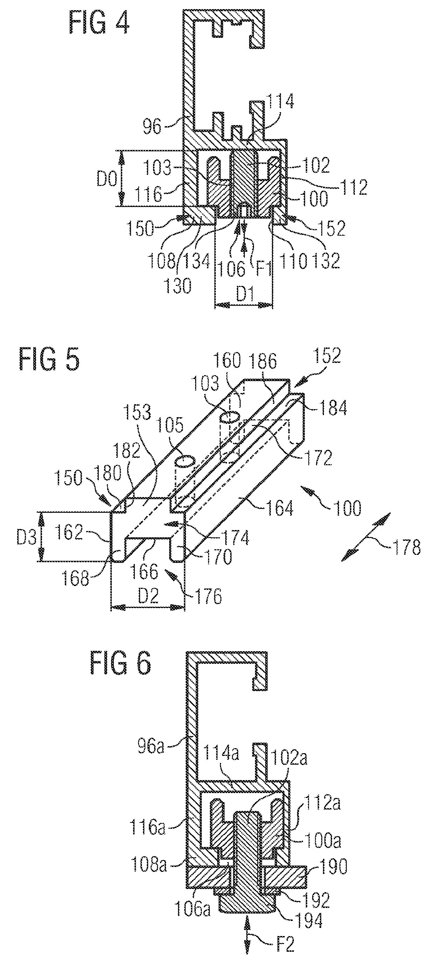

Figure 4 shows a cross section of vertical rail 96 and of connection bar 100 in more detail. Vertical rail 96 has a sliding channel 106 which houses connection bar 100. A front portion of vertical rail 94 forms a profile that has a cross section with the contour of a rectangle. Other shapes are possible as well, for instance a square like cross section.

The vertical rail 96 comprises:
- a front wall 108 that contains a vertical slot 110,
- a right wall 112,
- a back wall 114 that is opposite to slot 110, and
- a left wall 116.

This means that the walls 108, 112, 114 and 116 form a T-shaped groove or a T-shaped sliding channel 106. This channel 106 forms a guidance rail (slide way) for connection bar 100. Other shapes or profiles of rails are possible as well, for instance trapezoidal or dove tail shapes.

A distance D0 is slightly larger, for instance in the range of 0.5 mm to 3 mm, than a distance D3 that is explained in more detail with regard to Figure 5. Distance D0 is the distance between front wall 108 and back wall 114. Distance D3 is the height of the connection bar 100. Therefore, connection bar 100 is displaceable within the sliding channel 106 if screw 102 is not tightened.

Distance D1 is between a right side wall surface of the free edge 130 of front wall 108 and a left side wall surface of a free edge of front wall 108. Distance D1 is smaller than a distance D2, for instance in the range of 0.1 mm to 0.5 mm (millimeter). This is explained in more detail below with reference to Figure 5. Therefore, sliding block 100 can not fall through slot 110. The left free edge 130 has a back surface that is in touch with a shoulder 150 of connection bar 100. On the other side there is a back surface of the right hand free edge 132 that is in physical contact with a shoulder 152 of connection bar 100. Both shoulders 150 and 152 have orthogonal shoulder surfaces 180, 182 (runs) and 184, 186 (risers) respectively that correspond to orthogonal surfaces of free edge 130 and 132 respectively. Therefore, the shoulder surfaces 180 to 186 form the counterpart to the T-shaped groove. The shoulders 150 and 152 are located left and right of a protrusion 153 of connection bar 100.

Screw 102 includes a hexagonal hole 134 that is used to fasten screw 102. If screw 102 is fastened it presses against back wall 114. Furthermore, screw 102 presses against connection bar 100. Therefore, connection bar 100 is pressed against the front wall 108. This means that there will be a compression force F1 within screw 102. This compression force F1 securely fastens the connection bar 100 in sliding channel 106.

Figure 5 shows a perspective view of connection bar 100 Additionally to left shoulder 150 and to right shoulder 152 mentioned above connection bar 100 comprises:
- a top surface 160,
- a left side surface 162,
- a right side surface 164,
- a bottom surface 166,
- a left fin 168,
- a right fin 170,
- a back surface 172, and
- a front surface 174.

These parts are arranged with regard to each other as described in more detail in the sub claims, i.e. surfaces 160, 162, 164, 166, 172 and 174 are planar surfaces and are arranged on the sides of a parallelepiped.

A groove 176 is formed at the bottom of connection bar 100. Bottom surface 166 forms the bottom of groove 176. The fins 168 and 170 form the side walls of groove 176. A double arrow 178 directs in the longitudinal direction of connection bar 100 which corresponds to the longitudinal direction of vertical rail 96 if connection bar 100 is inserted in vertical rail 96.

Figure 6 shows a cross section of a second embodiment of the connection bar 100a. The letter "a" is used to refer to parts that were already explained with regard to Figures 4 and 5. For instance, vertical rail 96a corresponds to vertical rail 96. Both rails are essentially identical with regard to one to another. This means that there are again:
- a front wall 108a,
- a right wall 112a,
- a back wall 114a, and
- a left wall 116a.

Connection bar 100a is similar to connection bar 100. However instead of screw 102, i.e. a screw without a screw head, a screw 102a is used that has a screw head 194 in addition to the threaded shaft. A fastening plate 190 is fastened to vertical rail 96a by screw 102a. A washer 192 is arranged between head 194 and fastening plate 190. Plate 190 may correspond to plate 50 mentioned above.

This means that there is a tensile force F2 within screw 102a that fastens connection bar 102a to vertical rail 96a and that fastens plate 190 to vertical rail 96a. Contrary to Figure 5, screw 102a does not press against back wall 114a.

In other words, a static friction force usage for mechanical connection and orientation of parts in a telecommunication cabinet was explained. The description referred to the field of telecommunication device shelter mechanical structure that provides a connection with static friction force.

Carbon steel material has great strength and a comparably high density. Therefore it results in a higher weight when producing a telecommunication cabinet. It may be possible to use aluminum instead which has less density and less weight. Furthermore, it may be possible to make holes directly into the aluminum . However due to the low hardness of the aluminum material and its unsuitability for welding, the traditional mechanical connection way such as screwing or welding can not be used. Therefore, a new more appropriate connection was shown here by using the static friction for adjustment and/or connection.

The embodiments where in the field of telecommunication device shelter mechanical structure. It is one solution for using static friction force for orientation and for connection mainly using aluminum as a material to replace for instance carbon steel which may be used with screws and welding as a connection method.

The telecommunication device may be sheltered by different kinds of enclosures which are designed for different location usages. Some of those enclosures may be made of aluminum material to reduce the entire cabinets' weight. But due to the low hardness of the aluminum material it is unsuitable to use direct screwing connection or to use welding. Therefore, one solution is given here by using the static friction to adjust and connect different parts.

Using static friction force and aluminum material to realize the adjustment and the connection between different mechanical parts to replace the additional mechanical tightening ways such as screwing and welding and so on is an advantage. It avoids the shortage of lower hardness and unsuitability for welding of aluminum and also reduces the weight of the product. Only one or two steps more are necessary for fixtures in assembly and adjusting the positions of the different parts.

The embodiments relate to an adjustable screw together with a lock bar which compose the structure for using the static friction force to adjust the related parts at the right position. By using the static friction force between the lock bar and the frame slot together with the combination of the traditional screwing way it is possible to install the units onto the frames. A lock bar made of carbon steel material may be used as well as an adjustable screw made from iron or steel and a frame with a lock slot made for instance of aluminum material.

The lock bar is located inside the frame slot which prevents the lock bar from falling out of the slot easily. With the orientation static friction force of an adjustable screw the lock bar is fixed in the right position. The external units may be installed onto the lock bar by using the traditional screwing way. The enhanced static friction force between the lock bar and the frame slot tightens the units accordingly.

Although embodiments of the present invention and their advantages have been described in detail, it should be understood that various changes, substitutions and alterations can be made therein without departing from the spirit and scope of the invention as defined by the appended claim. For example, it will be readily understood by those skilled in the art that many of the features, functions, processes and methods described herein may be varied while remaining within the scope of the present invention. Moreover, the scope of the present application is not intended to be limited to the particular embodiments of the system, process, manufacture, method or steps described in the present invention. As one of ordinary skill in the art will readily appreciate from the disclosure of the invention systems, processes, manufacture, methods or steps presently existing or to be developed later that perform substantially the same function or achieve substantially the same result as the corresponding embodiments described herein may be utilized according to the present invention. Accordingly, the appended claims are intended to include within there scope such systems, processes, methods or steps.

### List of Reference signs

10 cabinet
12 frame
14 door
16 top cover
20 front bottom rail
22 right bottom rail
24 back bottom rail
26 left bottom rail
30a, 30b left front rail
32a, 32b right front rail
34a, 34b right back rail
36a, 36b left back rail
40 front top rail
42 right top rail
44 back top rail
46 left top rail
50 support plate
52 rectifier
54 to 68 screw
70, 72 ventilation channel
74 printed circuit board
76, 78 fan
80 slots for printed circuit boards
82 electronic devices
84 channel
86 locking mechanism
88 telescope arm
90, 92 mounting rail
94 horizontal rail
96, 98 vertical rail
100a connection bar
102a screw
103, 105 threaded hole
106 sliding channel
108, 108a front wall
110 slot
112, 112a right wall
114 back wall
116, 116a left wall
D0 to D2 distance
130 left free edge
132 right free edge
150 left shoulder
152 right shoulder
153 protrusion
160 top surface
162 left side surface
164 right side surface
166 bottom surface
168 left fin
170 right fin
172 back surface
174 front surface
176 groove
178 longitudinal direction
180 to 186 shoulder surface
190 blade
192 washer
194 screw head

## Claims

1. Network element (10),
comprising a mechanical frame (12),
the frame (12) comprising at least one rail (96),
the rail (96) comprising at least one first groove (106),
the network element (10) comprising at least one holding element (100) which is arranged in the first groove (106) and which is fastened to the first groove (106) by a fastening element (102),
the network element (10) comprising at least one electrical or electronic device (52) which is fastened to the holding element (100).

2. Network element (10) according to claim 1, wherein the groove (106) extends in a longitudinal direction of the rail (96),
and wherein the groove (106) comprises a cross section in a plane which is orthogonal to the longitudinal direction and wherein at the cross section the groove (106) widens with increased distance from an opening of the groove (106).

3. Network element (10) according to one of the preceding claims, wherein the rail (96) contains aluminum or consists of aluminum.

4. Network element (10) according to one of the preceding claims, wherein the holding element (100) contains iron or consists of at least 90 atom percent of iron.

5. Network element (10) according to one of the preceding claims, wherein the holding element (100) comprises at least one threaded bore, and wherein the fastening element comprises a threaded shaft which is arranged in the bore.

6. Network element (10) according to one of the preceding claims, wherein a free end of the fastening element (102) is pressed against a bottom surface (102) of the first groove (106).

7. Network element (10) according to one of the claims 1 to 5, wherein the fastening element (102a) pulls the holding element (100a) against an opening of the groove (106a).

8. Network element (10) according to one of the preceding claims, wherein the holding element (100) comprises a main body which is shaped like a bar.

9. Network element (10) according to claim 8, wherein the holding element comprising:
a first side directed to an opening (110) of the first groove (106),
a second side directed to the bottom (114) of the first groove (106),
a third side directed to a first side wall (116) of the first groove (106),
and a fourth side directed to a second side wall (112) of the first groove (106).

10. Network element (10) according to claim 9, wherein:
the first side comprises a first planar surface (160),
the second side comprises a second planar surface (166),
the third side comprises a third planar surface (162), and the fourth side comprises a fourth planar surface (164).

11. Network (10) according to claim 10, wherein:
the first surface (160) is arranged in parallel to the second surface (166),
the third surface (162) is arranged in parallel to the fourth surface (164), and
the third surface (162) is arranged orthogonal to the first surface (160).

12. Network element (10) according to claim 10 or 11, wherein:
a second groove (176) is arranged at the second side of the holding element (100),
the second surface (166) forming the bottom of the second groove (176).

13. Network element (10) according to one of the claims 10 to 12, wherein a first shoulder (150) extends along a first side of the first surface (160),
a second shoulder (152) extends along a second side of the first surface (160), and
wherein the second side is opposite to the first side.

14. Network element (10) according to claim 13, wherein the first shoulder (150) and the second shoulder (152) each comprising:
a planar first shoulder surface (180, 184), and
a planar second shoulder surface (182, 186),
the second shoulder surface (182, 186) is arranged preferably orthogonally to the first shoulder surface (180, 184).

15. Network element (10) according to one of the preceding claims, wherein the network element (10) comprises telecommunication equipment, a router or a switch.

16. Holding element (100),
comprising a main body,
the main body comprising:
a first side,
a second side,
a third side,
a fourth side, and
at least one threaded bore (103).

17. Holding element (100) according to claim 16 wherein the holding element (100) comprises at least one feature of the holding element (100) according to one of the claims 1 to 15.

18. Profile rail (96),
comprising at least one groove (106),
wherein the groove (106) extends in a longitudinal direction of the rail (96),
wherein the groove (106) comprises a cross section in a plane which is orthogonal to the longitudinal direction, and wherein at the cross section the groove (106) widens with increased distance from the opening of the groove (106).

19. Profile rail (96) according to claim 18, wherein the profile rail (96) comprises at least one feature of a rail (96) according to one of the claims 1 to 15.

20. Set of a holding element (100) according to claim 16 or 17 and a profile rail (96) according to claim 18 or 19, wherein the holding element (100) fits into the profile rail (96).
